# EUROPEAN PATENT APPLICATION

(11) **EP 4 541 180 A1**
(43) Date of publication of application: **23.04.2025**
(21) Application number: 23823336.5
(22) Date of filing: 07.05.2023
(51) Int. Cl.: A01K 1/01

(54) **AUTOMATIC ELECTROMECHANICAL DEVICE FOR COLLECTING, PROCESSING AND STORING ANIMAL FAECES AND URINE USING A RECOVERABLE SUBSTRATE**

(30) Priority: 16.06.2022 CO 22008509
(71) Applicant: Alonso Sanchez, Jorge Miguel, 104 Bogota (CO); Kalmar Moreno, Alejandro, F-35 Bogota (CO)
(72) Inventor: Alonso Sanchez, Jorge Miguel, 104 Bogota (CO); Kalmar Moreno, Alejandro, F-35 Bogota (CO)
(74) Representative: Valet Patent Services Limited
(86) International application number: PCT/IB2023/054731
(87) International publication number: WO 2023/242641

(57) **Abstract**

The invention relates to an automatic device for collecting animal feces and urine with a recoverable substrate. The device consists of ferrous or magnetic steel granules, which are highly resistant to mechanical stress, hydrophobic to prevent the adsorption of organic load (feces (603) and urine (602)) and have a finish that simulates "cat litter." This substrate (601), which receives the organic load (602, 603), is placed on a tray (103), which uses vibration to direct it towards a drying, grinding, and cleaning unit (201). Along with a flow of hot air and a series of synchronized movements of the device, the processed organic load (604) is deposited into a waste collection unit (401), and the magnetic steel granules are separated and recovered by magnetism into a recovered substrate reservoir (107), making it available for reuse in a new cycle.

## Description

### FIELD OF THE INVENTION

The present invention introduces an automated electromechanical device designed to efficiently collect, process, and dispose of animal waste, utilizing a reusable substrate or bedding material. The device is suitable for both domestic pet care and industrial animal husbandry applications.

### BACKGROUND

Owning or breeding domestic animals, such as cats, dogs, rabbits, small pigs, guinea pigs, hamsters, rats, or mice, can be a demanding task. This is due to the constant need to collect, handle, and dispose of animal waste. Whether in a home or a breeding facility, daily cleaning is essential to maintain a hygienic and odor-free environment.

Moreover, the cleaning process is not only time-consuming but also costly. It requires disposable bedding or substrate, like bentonite clay, crystal clay litter, or sawdust, along with plastic bags, gloves, water, soap, disinfectants, or odor eliminators. These supplies contribute to significant monthly expenses and environmental concerns due to the presence of non-biodegradable contaminants.

In essence, cleaning animal waste presents three primary challenges: it is time-consuming, expensive, and environmentally harmful. To address these issues, a comprehensive literature review was conducted, yielding the following relevant documents:
- Document US921232146B2 describes an apparatus and method for maintaining domestic animal waste in a fully enclosed environment, in which the waste can be removed, and hygienic litter can be added/replaced in a substantially sealed, dust-free manner. In one aspect, the pet waste management system comprises a sealed medium through which litter can be added and/or removed and/or exchanged for fresh litter without substantial release of dust and contaminants from the litter system. The invention also provides a receptacle or container for receiving used litter and/or for housing fresh litter.
- Document EP1301067 describes a magnetic litter system for pets, minimizing the dispersion of litter particles by pets such as cats. The system includes a pet litter in the form of particles containing a material, such as iron, capable of being attracted by a magnet. A magnet is located outside the litter containment area, so that when the pet leaves the litter containment area, the magnetically attracted litter particles follow the pet out of the litter containment area, are attracted to and collected by the magnet. A mat or carpet can also be placed over the magnet to collect litter particles. During cleaning, the mat and magnet are separated, and the collected litter is discarded.
- Document EP1681919 describes a self-cleaning litter box configured to use a cartridge that may include a compartment for the litter and a compartment for waste. In another embodiment, the cartridge may not be compartmentalized. The cartridge may be disposable, thus eliminating the need for the user to clean the litter box and handle heavy litter containers. In other embodiments, the system includes a rake assembly configured with a drive assembly that is protected against contamination. According to another embodiment of the invention, the self-cleaning litter box is configured for use with all types of litter, including crystal litter.
- Document CN210825974U provides the technical solution: a pet excrement and urine retriever. The object of the utility model is to provide a retriever for pet excrement and urine. To achieve the foregoing object, the utility model provides the following technical scheme: it comprises a pet excrement retriever, including a housing, a fixed funnel having an articulated cup at the top of the inner chamber of the housing, the lower surface of the funnel is provided with a closing plate, the fixed mounting of equidistance from the lower surface of the closing plate has at least three ultraviolet lamps, the fixed reaction chamber having an articulated cup at the bottom of the inner chamber of the housing, the fixed heating pipe at least three that is equipped with symmetry inlays inside the reaction chamber, the first fixed motor that is equipped with inlays on one side of the housing on the inside, the output transmission of the first motor is connected to the main shaft, the main shaft is alternately connected to the housing, the outer wall connected fixedly with the stirring board of the main shaft.

After reviewing the technologies that comprise the prior art, it becomes evident that these prior art references lack the following criteria:
1. Safety: In the solutions found specifically for automatic litter boxes, there is a risk of animal entrapment. Although electronic sensors and safety systems are implemented to prevent this, the functional condition remains present, being at the mercy of the equipment's reliability and/or its agility. For example, a small cat may not be detected by a weight or presence sensor, while the equipment continues to perform an operation with the animal inside the litter box, potentially causing laceration or entrapment.
2. **Environmental Sustainability:** Previous technologies continue to focus on the use of bentonite clay, clay or crystal litter, and plastic bags, which generates a very serious environmental impact. Their disposal causes the death of thousands of aquatics, terrestrial, or aerial animals due to ingestion when mistaken for food. Similarly, the incineration of plastic bags for disposal produces high levels of pollution and generates greenhouse gases.
3. **Economic Sustainability:** Many of the previous solutions are based on bentonite or crystal litter, and the continuous consumption of such a product is costly. In addition, these devices are often bulky, with multiple electromechanical components that wear out over time, requiring continuous repairs or technical services for maintenance.
4. **Hygiene:** In the solutions, it is evident that the substrate remains dirty for several uses to economize, consequently, the animal drags biological contamination from its sanitary area to other spaces, favoring the transmission of infectious diseases and affecting the health of the people who live with it.
5. **Comfort:** In some of the previous technologies, the animal owner must spend a considerable amount of time cleaning the litter boxes, removing waste in plastic bags, replenishing the litter, deodorizing, and disinfecting the environment. The lack of comfort can affect the human-animal relationship.

In a brief, it is observed that there is no solution in the prior art that comprehensively addresses the identified problems, which is why a new technology is presented that reduces manual effort by offering an automated device capable of collecting, processing, and storing animal excrement, which does not require bentonite, clay, or crystal, since it uses a recoverable magnetic substrate, additionally reducing contamination because it offers a biodegradable collector that retains the volatile odors of the organic load.

### DETAILED DESCRIPTION

This invention introduces an automatic device for collecting animal feces and urine using a recoverable substrate. This substrate consists of ferrous or steel granules with a magnetic attraction, having a diameter between 1 and 10 mm and coated with a highly resistant, hydrophobic paint to prevent the adsorption of organic matter (feces (603) and urine (602)), allowing for a finish that simulates "cat litter".

This substrate (601), which receives the organic load (602, 603), is placed on a loading tray (103), which, through vibration, directs the dirty substrate to a drying, grinding, and cleaning unit (201). Together with a flow of hot air and a series of synchronized movements of the device, the processed organic load (604) is deposited in a waste collection unit (401) and the metallic granule substrate is separated for magnetic recovery to a recovered substrate deposit (107) where it is prepared for reuse.

In order to improve understanding of the device, the units that compose it will be described first, followed by the mechanical and functional principles, and finally, the operational process will be detailed.

### I. COMPONENTS:

1. **Drying, Grinding, and Cleaning Unit (201):** This is a set of elements responsible for recovering the substrate (601), grinding and drying the feces (603), and evaporating the urine (602).
2. **Air Conditioning Unit (301):** This is a set of elements that supply hot air enriched with ozone with a germicidal action on the organic load. The air dries the substrate (601) and conducts the vapors through the channels or tracks (209, 211, 213) of the drying, grinding, and cleaning unit (201), and of the Waste Collection Unit (401), until it reaches a carbon filter (405) that releases the air without odor leakage to the outside.
3. **Waste Collection Unit (401):** This unit is responsible for receiving the air from the Air Conditioning Unit (301), the pulverized feces or processed organic load (604), and the urine (602) in its final stage. It disposes of these in a waste reservoir (403), a urine evaporator (404), and a carbon filter (405). The waste reservoir (403) is foldable for better handling, 100% biodegradable, with a storage capacity between 100 ml and 50,000 ml, and can be transparent to see the level of processed organic load (604) content and removable to be removed once its capacity is reached.
4. **Unit Control (510):** This system, through the electronic unit (508), controls and receives the signals from the device, and also sends the orders to activate the components of the drying, grinding, and cleaning unit (201), the air conditioning unit (301), and the sensor (505) that verifies the position of the waste reservoir; said unit (508) sends alerts to a control or registration application through wireless connections: Bluetooth, Wi-Fi, infrared, among others.
5. **Shell:** The device, on its outer part, has a dome (101) or a bed retention bib (104) that can carry the unit control (510) on its upper part, on its lower part it rests on the lower unit shell (113) and on its front part an opening (102); said lower unit shell (113) contains inside the loading tray (103), the drying, grinding, and cleaning unit (201), the air conditioning unit (301), and the waste reservoir (403).
6. **Power supply:** The units, control systems, and motors are activated by an electrical power point that is supplied between 100 and 240 VAC and supplies the equipment with 12 VDC.
7. **Control System and Technological Tools:** The following describes the elements that make up the control system and technological units: a. The electronic unit (508): It is a PCB electronic board that comprises the following components: A module for controlling a stepper motor or a DC motor; An electrical output module, relay or solid state; An opto-coupled electrical input module; A microcontroller or programmable microprocessor module; A Bluetooth, Wi-Fi, infrared, and other communications module typical of this type of application; A memory expansion and data storage module; A module for connecting peripheral devices such as a video camera, touch screen, LED lights, speakers, and/or microphones; A power supply, voltage regulation, and protection module for the board; Accessories required for assembly, signaling, connection, etc. Said microcontroller or microprocessor has the appropriate programming algorithms for all control, supervision, and communication requirements. b. Power supply (509): It consists of a rectifier with an input of 100 to 240 volts AC 50/60 Hz and an output of 12 volts DC and a power between 30 and 120 watts. The connection to the equipment can be made by plug and socket or direct connection to the PCB. The connection to the AC source will have the appropriate plug. c. Unit control (510): It is a small box with controls for performing basic operations housed in the dome (101) of the device. The control communicates with the device units wirelessly, either in Wi-Fi, Bluetooth, infrared, or similar protocols. d. Digital environment: The electronic unit (508) will have the hardware and software resources necessary to couple the equipment to a projected digital environment, it will be composed of a web page, applications (App) and programs required for the different multimedia devices, such as smartphones, tablets, computers, smartwatches, smart speakers, among others. The objective is to offer multimedia tools that facilitate interaction and control by the user.

### II. FUNCTIONAL PRINCIPLE AND SYNCHRONIZATION OF ELEMENTS:

To understand the functional principle of this technology, it is necessary to describe the relationship between its elements, which are explained in the following four parts:
1. **Mechanical Synchronization:** The device has a main electric motor (501) that rotates the process flywheel (202). Associated with this flywheel are the units and mechanisms of the device that require movement, such as: the substrate recovery cam (205), the mechanism (206), the substrate dosing cam (207), the agitators for grinding and cleaning (208), the cam for the air conditioning unit (301), and the UV germicidal unit cleaner (507). All the mentioned elements are coupled homokinetically, with the aim of generating parallel, sequential, and synchronized movements for the three different material flows, which are:
   a. Organic load flow
   b. Substrate flow
   c. c. Air flow
2. **Support Operations:** These are precise electrical actions that the electronic unit (508) automatically executes to activate the device elements and allow the material flows (601, 602, 603). These elements include ozone generator (308), air heater (309), loading tray electro-vibrator (502), and UV germicidal unit action (506). Additionally, the main electric motor (501) has an electronic control of direction and number of turns.
3. **Status Indications:** These are moments validated by the control unit (508) for its correct operation. These are the signal of entry and exit of the animal to the equipment sensor (503), the passage of the process flywheel through a specific sf the sensor points (504), and the correct position of the waste cartridge in the device sensor (505).
4. **Electronic Control:** The electronic unit (508) is responsible for coupling and coordinating the entire operation through an interface that allows a personalized configuration of the algorithm according to climatic variables, operation periodicity, energy saving, quantity and type of animal, among others.

### II. DETAILED DESCRIPTION OF THE OPERATIONAL PROCESS

1. **Device Readiness for Service:** Unlike previous technologies where the automated operational process marks a starting point from the animal's entry into the enclosure, the presented technology takes as the starting point of the operational cycle the moment the substrate (601) is replenished on the tray (103). This is done automatically by the equipment through the cam (207) and the actuator (108) that open the gate (111) which is part of the recovered substrate deposit (107), and through the discharge mouth (112) the substrate (601) exits towards the tray (103). The dosage or amount of substrate (601) deposited on the tray (103) depends on the speed of rotation of the process flywheel (202) which determines the opening time or passage of the gate (111).
2. **Service Completed:** "*Service completed*" is understood as when the process of the animal entering the equipment is validated, a defined time for the deposition of the excrement on the substrate, and the exit of the animal. With the equipment ready for service, the animal enters through the opening (102), which activates the animal entry sensor (503) and the change of signal is recorded by the electronic unit (508). Upon exiting the animal, through the same opening (102), the sensor (503) registers the change of signal again and thus the animal's residence time within the equipment is calculated. If the residence time is between 10 and 160 seconds, it is validated as "*service completed*", that is, when the animal has deposited the organic load on the tray (103). With the animal entry signal, the elements of the drying, grinding, and cleaning unit (201) and the air conditioning unit (301) are activated to absorb the service vapors through air intake opening (302). When the animal leaves the unit, it passes over the magnetic mat (114) which magnetically attracts the substrate granules (601) trapped in its paws.
3. **Flow and Process of the Organic Load:** The flow and process of the organic load describes its path and process from the moment a service is completed for the animal, until it is converted into processed organic load (604). The objective of this process is to separate, process, and dispose of the organic load for its subsequent removal from the waste collection unit (401).
   With the validation of service completed by the electronic unit (508), the following process begins: The electronic unit (508) activates the main motor (501) and this rotates the process flywheel (202) until aligning the windows (203) with the load classifier (106); then the electro-vibrator (502) is activated, which exerts vibration on the tray (103) displacing in a time of 5 to 200 seconds the substrate (601) and the organic load (602, 603) to carry out the transfer through the duct (105) towards the load classifier (106), where the substrate (601) and urine (602) pass through the grids (115) and slide down the downcomer (116) that drops them into the substrate channels 1 and 2 (211, 213) and the feces (603) with some granules of substrate (601) adhered fall into the feces channel (209), where the germicidal process begins through the UV germicidal unit (506); the drying and deodorization of the feces (603) is achieved by the passage of air from the air conditioning unit (301); the urine (602) is drained through the mesh (212) to the urine evaporator (404), where it evaporates due to the passage of air from the air conditioning unit (301); The process flywheel (202) has grinding agitators (208), which fit into the channels (209, 211, 213); said flywheel (202) is actuated by the motor (501) transmitting an oscillating rotation, moving the agitators (208) that agitate and grind the feces (603) to a size smaller than the size of the mesh for passing processed feces (210); the ground and dried feces (603) converted into processed organic load (604) pass through the collection mouth (402) to fall into the waste reservoir (403) of the waste collection unit (401); said unit (401) has translucent walls that allow observing from the outside the fill level of waste and thus being able to dispose of it opportunely. Said unit (401) is 100% biodegradable, which ensures the periodic renewal of the urine evaporator (404) and the activated carbon filter (405).
4. **Substrate Flow and Process:** The substrate flow and process describe its path and process from the moment a service is completed for the animal, until a new load of substrate is replenished in the tray (103). The objective of this process is to separate, clean, and prepare the substrate for reuse in the unit.
   With the validation of service completed by the electronic unit (508), the following process begins: The electronic unit (508) activates the main electric motor (501) and this rotates the process flywheel (202) until aligning the windows (203) with the load classifier (106); then the electro-vibrator (502) is activated, which exerts vibration on the tray (103) displacing in a time of 5 to 200 seconds the substrate (601) and the organic load (602, 603) to carry out the transfer through the duct (105) towards the load classifier (106), where the substrate (601) and urine (602) pass through the grids (115) and slide down the downcomer (116) that drops them into the substrate channels 1 and 2 (211, 213) and the feces (603) with some granules of substrate (601) adhered fall into the Channel for feces process (209), where the germicidal process begins through the UV germicidal unit (506); the drying and deodorization of the feces (603) is achieved by the passage of air from the air conditioning unit (301); the urine (602) is drained through the mesh (212) to the urine evaporator (404), where it evaporates due to the passage of air from the air conditioning unit (301); The process flywheel (202) has grinding agitators (208), which fit into the channels (209, 211, 213); said flywheel (202) is actuated by the main electric motor (501) transmitting an oscillating rotation, moving the agitators (208) that agitate and grind the feces (603) to a size smaller than the size of the Mesh for passing processed feces (210); the ground and dried feces (603) converted into processed organic load (604) pass through the collection mouth (402) to fall into the waste reservoir (403) of the waste collection unit (401); said unit (401) has translucent walls that allow observing from the outside the fill level of waste and thus being able to dispose of it opportunely. Said unit (401) is 100% biodegradable, which ensures the periodic renewal of the urine evaporator (404) and the activated carbon filter (405).
5. **Air Flow and Process:** The air flow describes its path and process from entering the equipment to its exit. The objective of this process is to capture, condition, and circulate the air required for the process.
The air conditioning unit (301) starts its operation when the animal enters the equipment, the sensor (503) sends a signal to the electronic unit (508) which turns on the main electric motor (501) that gives movement to the process flywheel (202), this carries a cam for the air system (204) that moves the actuator (307) expanding the bellows (304), the latter is filled with the air that enters through the air duct (303) towards the aspiration valves (305) while the expiration valves (306) prevent the backflow of air from the process. Simultaneously with the activation of the process flywheel (202), the ozone generator (308) is activated which generates and levels the ozone, and an air heater (309) is activated which heats the incoming air, subsequently the mechanisms contract the bellows (304), the aspiration valves (305) are closed, and the conditioned air is pumped through the expiration valves (306) towards four spaces of the process: The recovered substrate deposit (107), the drying, cleaning, and grinding unit (201), the ducts for the air curtain (310), and the waste collection unit (401). The entry of the conditioned air into these spaces pushes the air contained therein through the activated carbon filter (405) and exits to the atmosphere through the mouth (406). At the air outlet through the mouth (406), the activated carbon filter (405) retains odor residues. These process spaces through which the process air circulates are airtight to prevent odor leaks. As mentioned in the organic load flow, the waste collection unit (401) is discarded when it is full and along with it the urine evaporator (404) and the activated carbon filter (405) are discarded, which guarantees the periodic renewal of the filter (405).

### ADVANTAGES OF THE INVENTION

This device offers the following advantages:
1. **Intrinsic Safety:** The device is intrinsically safe, as its design does not expose any mechanism, process condition, or factor that could compromise the health of the owner or their animal.
2. **Reduction of Environmental Impact:** The device addresses the following aspects:
   - No disposable substrates: This technology eliminates the use of disposable substrates such as bentonite, crystal, plastic, wood, or starch. The presented substrate does not retain organic load, does not absorb odors and is hydrophobic; the substrate is cleaned and recovered; the internal mechanism prevents clean substrates from mixing with contaminated ones.
   - Reduced carbon footprint: The production of the device and the substrate does not emit the same amounts of carbon emitted by the production and commercialization of bentonite.
   - Eco-friendly final disposal: The organic load is dehydrated and ground, with a weight and volume less than one-fifth of the usual, deposited in a light, 100% biodegradable disposable cartridge, no plastic bags are required.
   - Sustainable production: The design of the device is adaptable, with lightweight mechanisms, requires very few complementary equipment, biodegradable materials can be used in all its components.
3. **Adaptation of the equipment to the environment:** The device offers the possibility of implementing personalized solutions, it can be developed with removable covers, of different shapes, sizes, colors, and textures, etc. Providing the option of harmonizing the equipment in various scenarios.
4. **Increases the level of trust:** The presented device is characterized by its usability for the owner and their animal. Its process and mechanisms are simple, eliminating the contact of the animal with the mechanisms that process the excrement and the substrate.
5. **Increases the level of hygiene:** The device provides the following:
   - Avoids the manual handling by the owner of contaminated substrates or the animal's organic load.
   - Eliminates the interaction of the animal with the contaminated substrate, each time the device is used for a new service, it will find clean substrate.
   - Dehydrated organic load and pathogens neutralized by UV radiation.
   - Absorption of volatiles.
   - The device separates the organic load from the substrate, treats the substrate and recovers it.
6. **Increases comfort levels:** The device works continuously and remotely, operates the internal processes automatically, can be adjusted remotely; an animal owner can be absent for several days or weeks and the device continue to provide service without supervision.
7. **Motivates pet ownership:** Animal abandonment is reduced because the device facilitates the task of pet ownership, improving human-animal environmental conditions.
8. **Saves on pet ownership costs:** It eliminates the monthly consumption of bentonite, plastic bags, gloves, disinfectants, among others, and does not use water in the cleaning and disinfection process.

The following presents the improvements of the described device with respect to the technology shown in the background chapter:

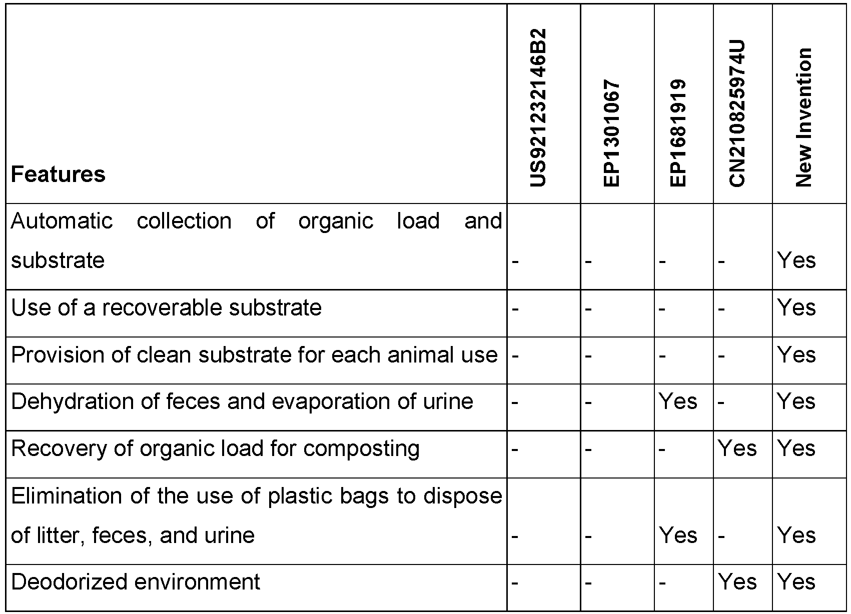

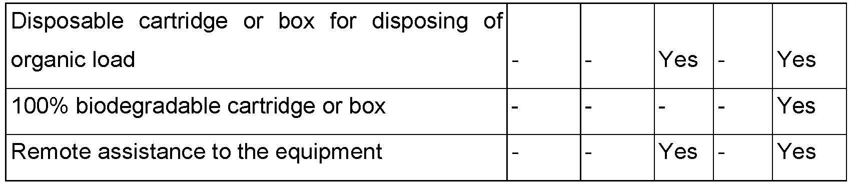

### BRIEF DESCRIPTION OF THE DRAWINGS

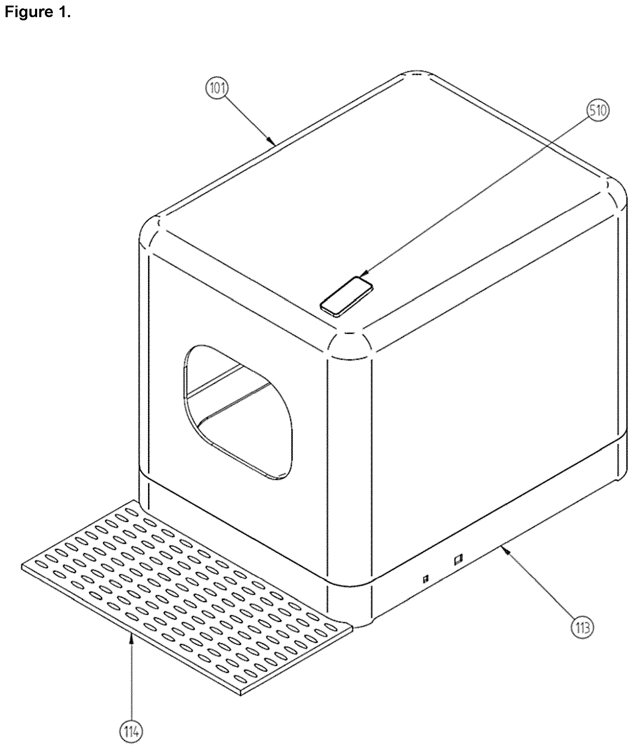

Figure 1: Isometric view of the automatic electromechanical device for collecting, processing, and storing animal feces and urine using a recoverable substrate.

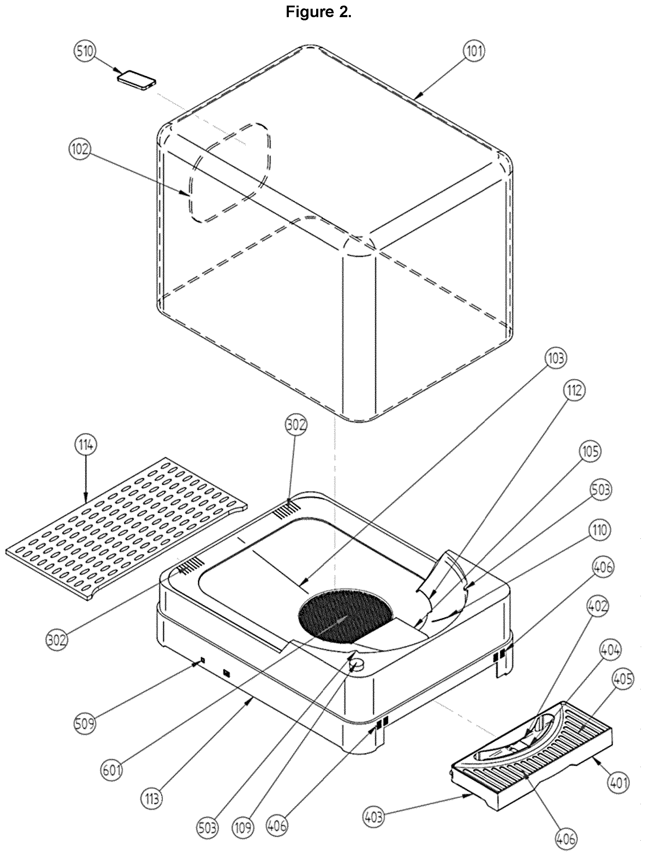

Figure 2: Exploded view of the device.

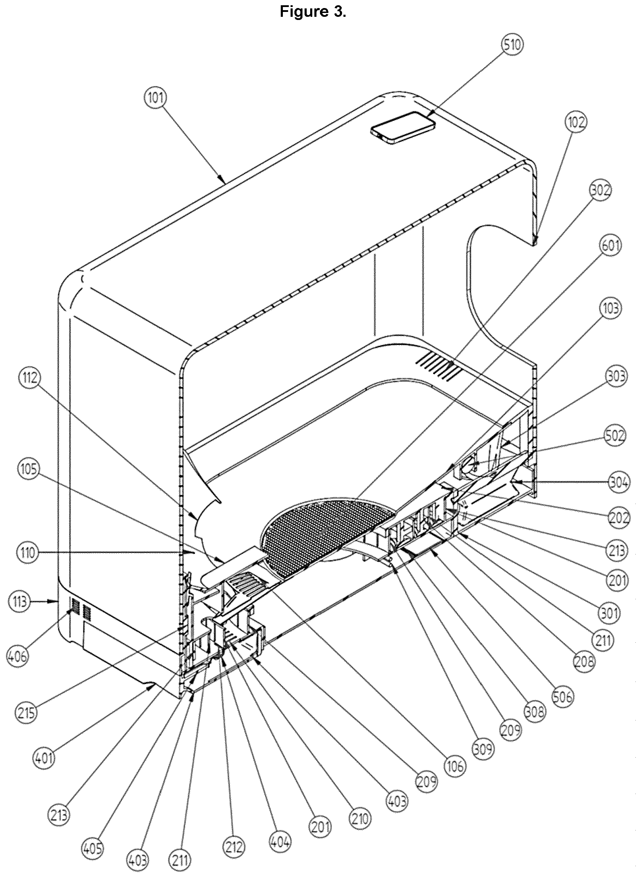

Figure 3: Cut-away view of the device.

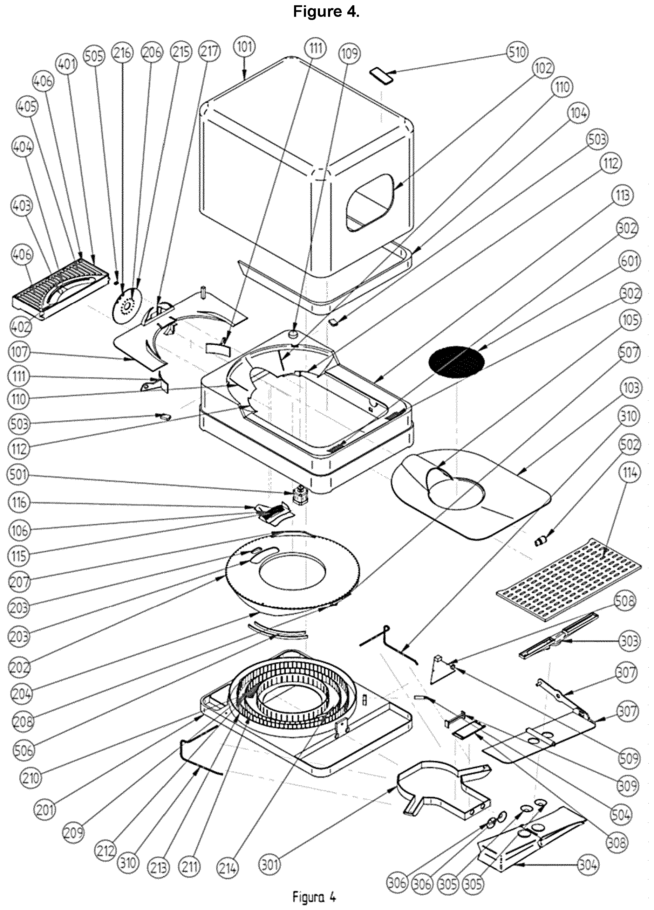

Figure 4: Exploded view of the device.

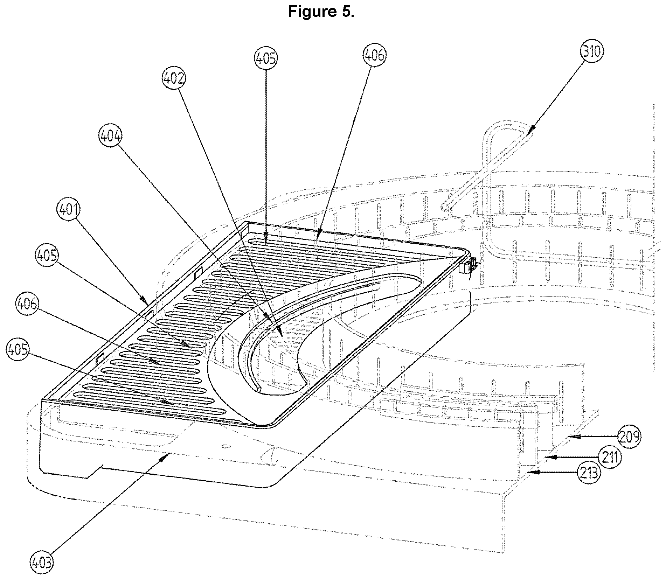

Figure 5: Isometric view of the waste collection unit (401).

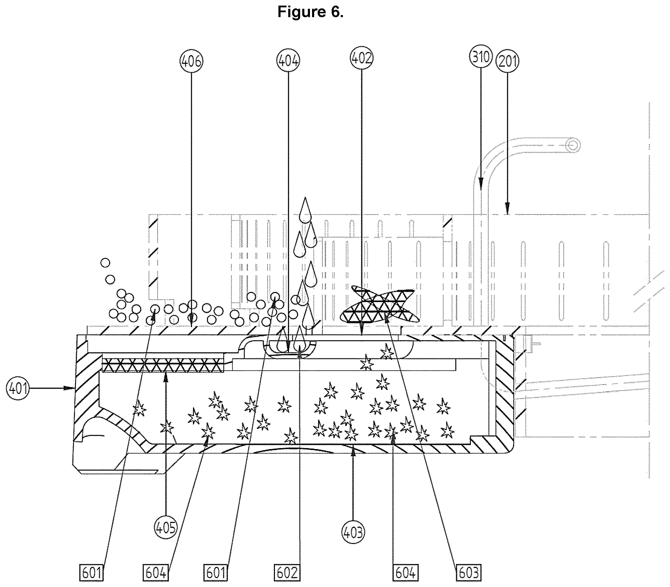

Figure 6: Flow diagram of the waste collection unit (401) in a side view.

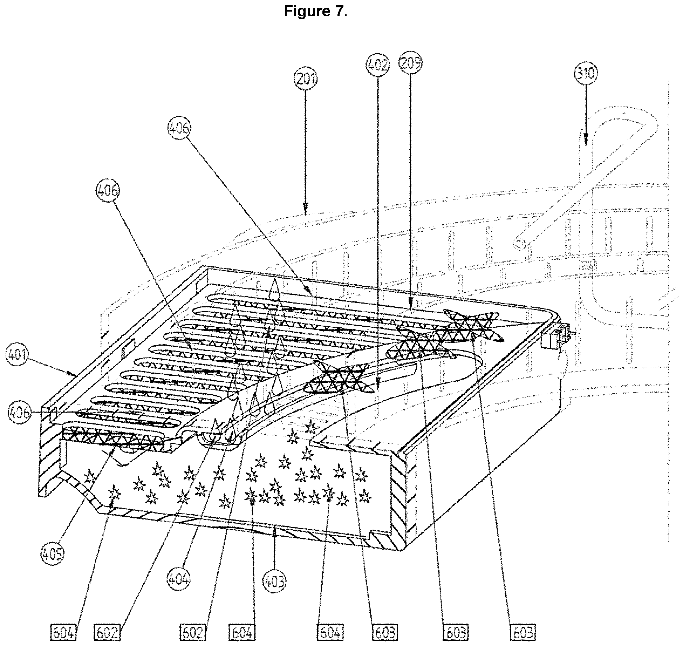

Figure 7: Cut-away view of the waste collection unit (401).

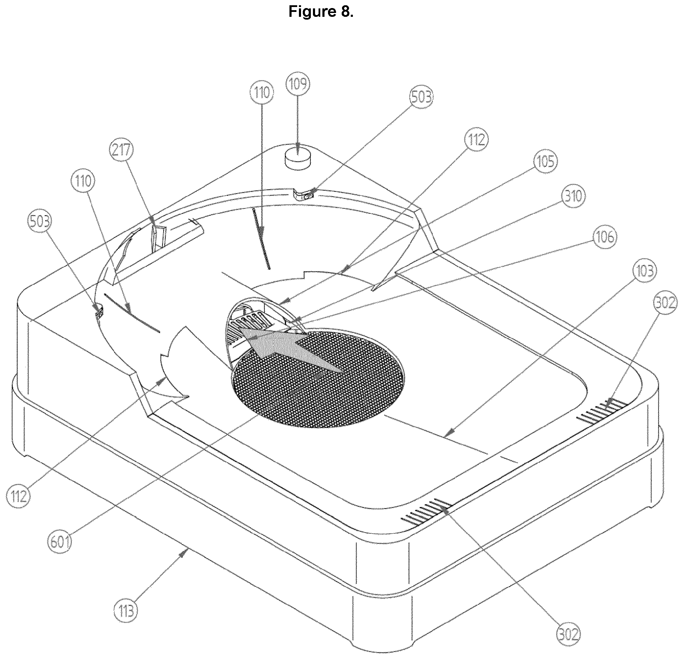

Figure 8: Isometric view of the loading tray (103) with substrate (601) and the lower unit shell (113).

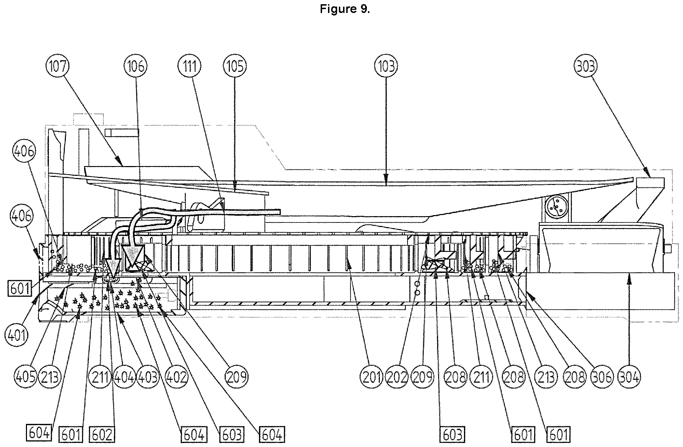

Figure 9: Flow diagram of the organic load.

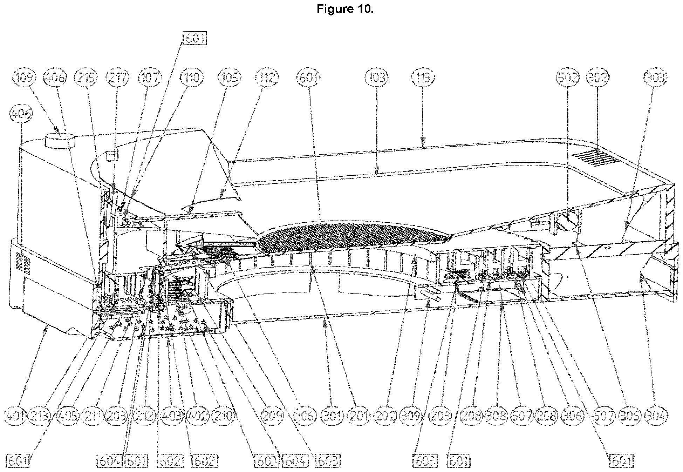

Figure 10: Flow diagram of the organic load in a cut-away view of the device.

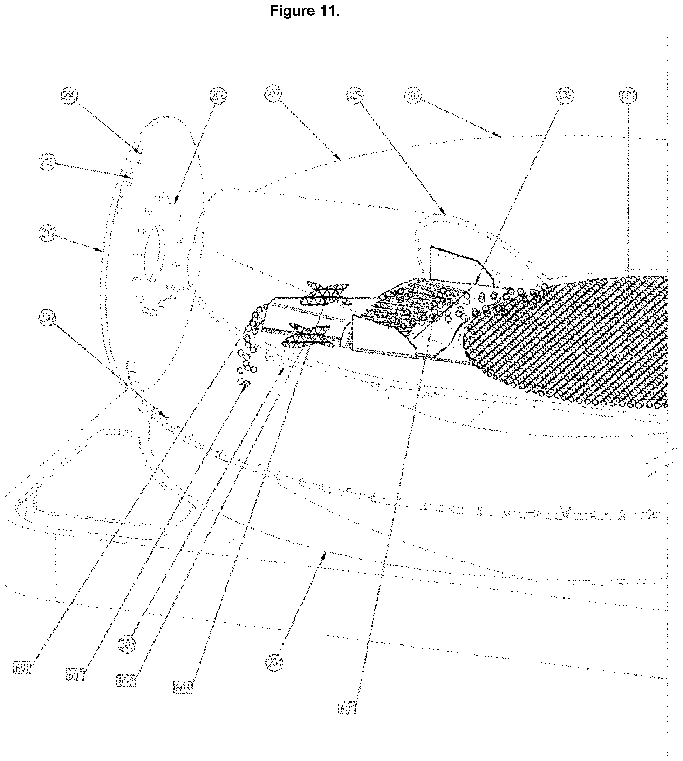

Figure 11: Isometric view of the substrate (601) and the load classifier (106).

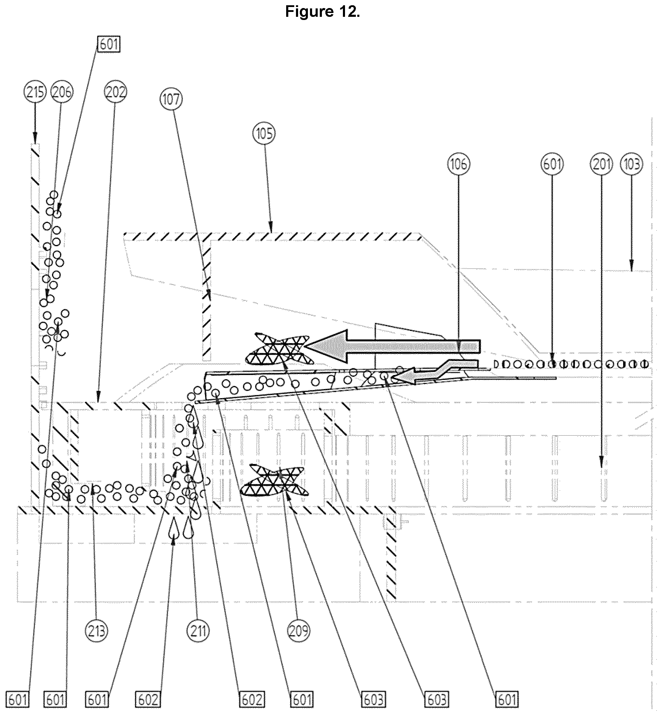

Figure 12: Flow diagram of the substrate (601), urine (602), and feces (603).

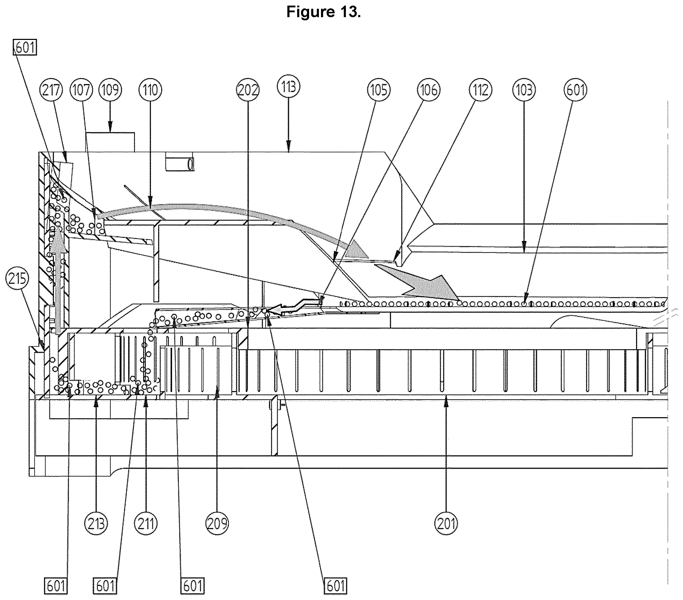

Figure 13: Flow diagram of the substrate (601) in the channels (211, 213) and substrate elevator (215).

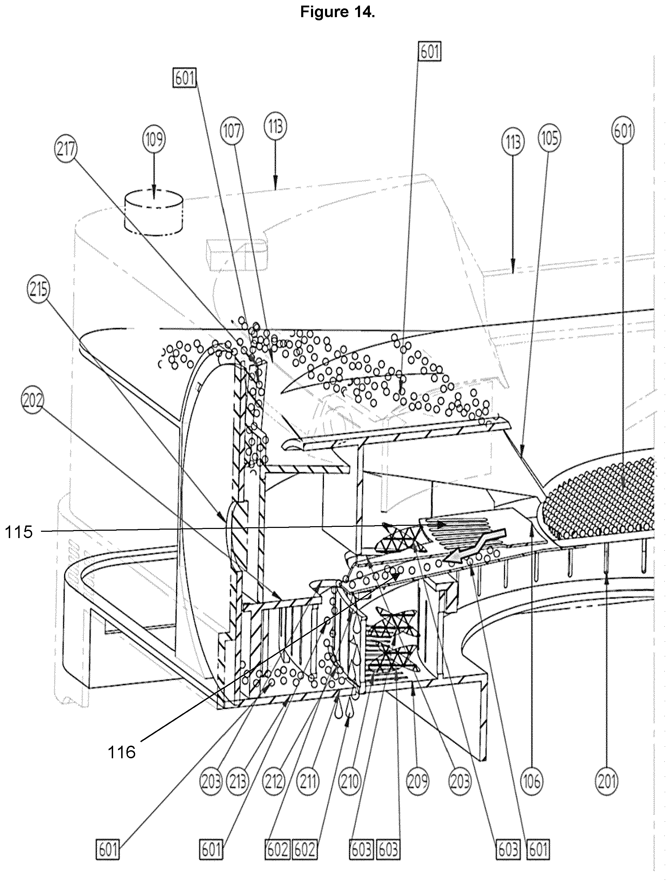

Figure 14: Flow diagram of the substrate (601), with a detailed isometric view of the substrate elevator (215), the opening for substrate replacement (109), and the recovered substrate deposit (107).

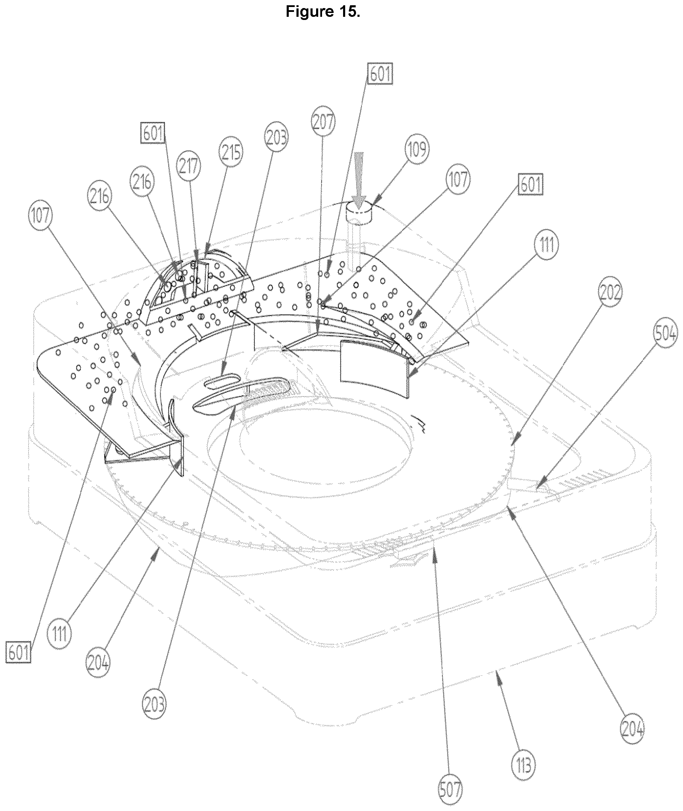

Figure 15: Flow diagram of the substrate (601) in the recovered substrate deposit (107).

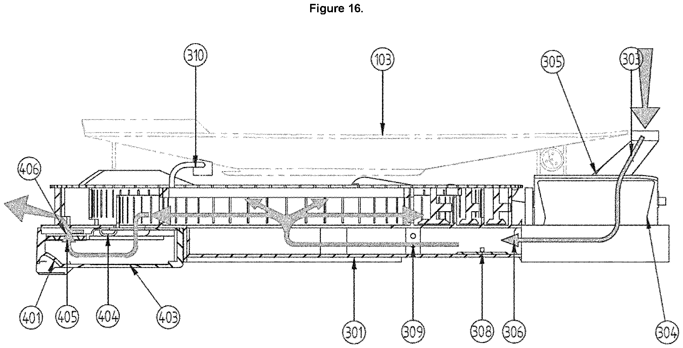

Figure 16: Air flow diagram in a side cut-away view of the device.

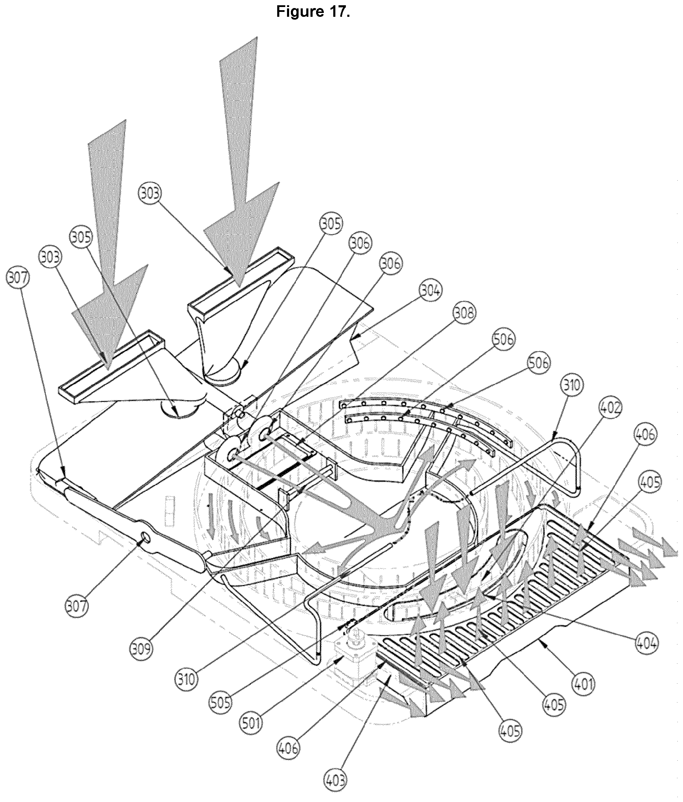

Figure 17: Air flow diagram in an isometric cut-away view of the device.

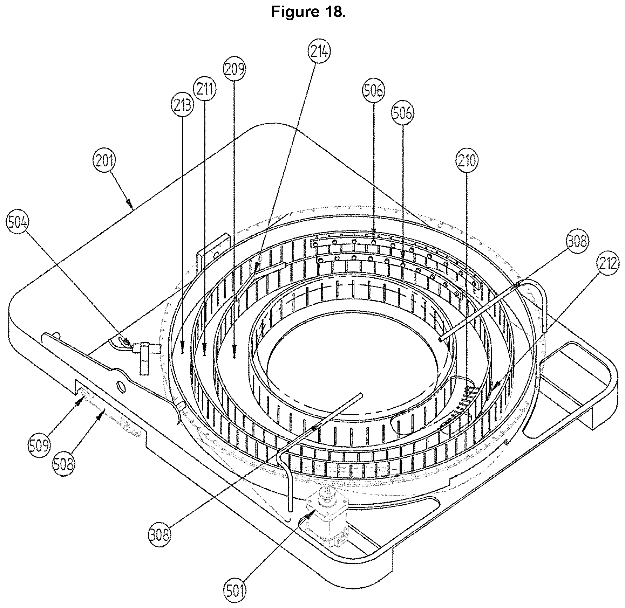

Figure 18: Cut-away view of the Drying, Grinding, and Cleaning Unit (201).

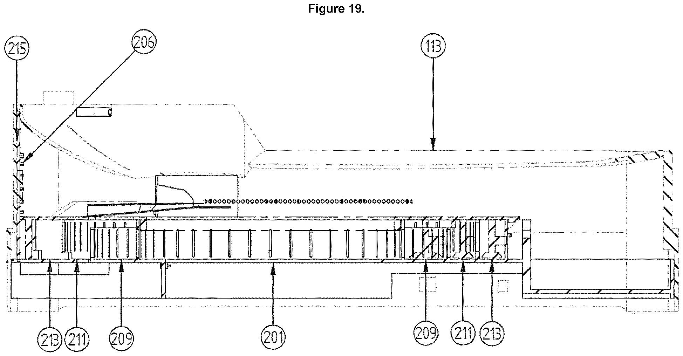

Figure 19: Side view of the Drying, Grinding, and Cleaning Unit (201).

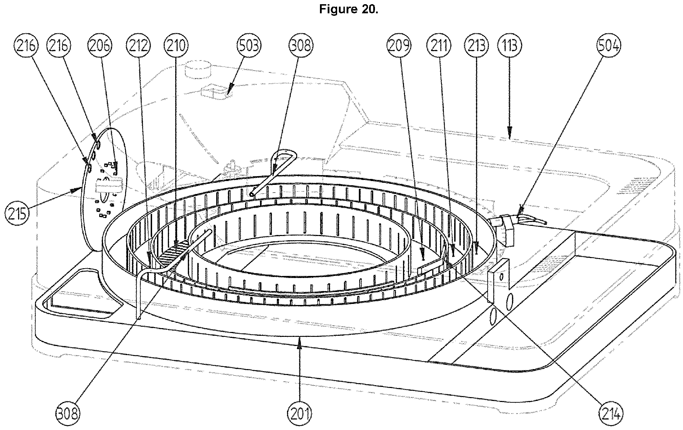

Figure 20: Isometric view of the Drying, Grinding, and Cleaning Unit (201).

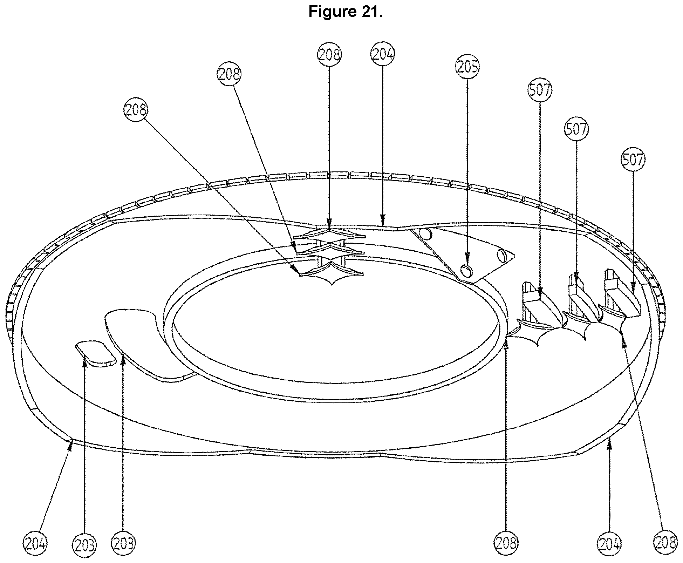

Figure 21: Cut-away view of the process flywheel (202).

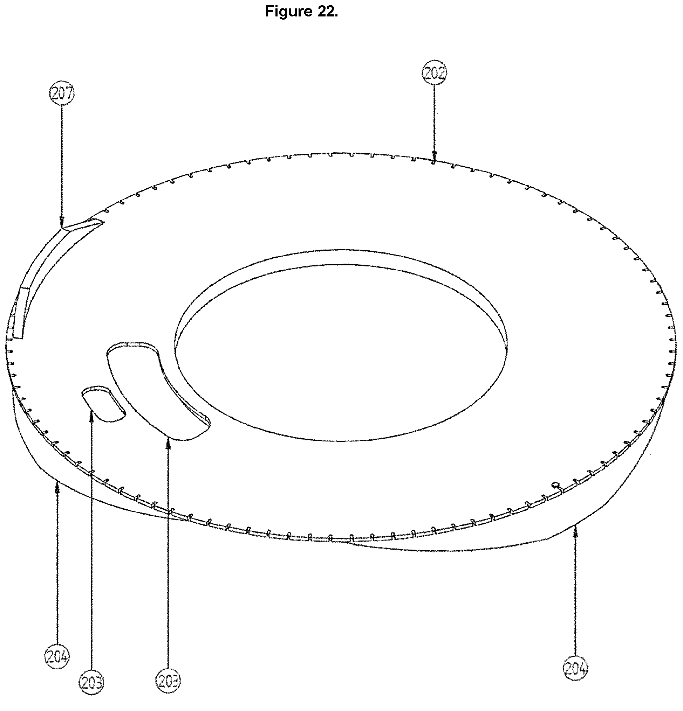

Figure 22: Isometric view of the upper side of the process flywheel (202).

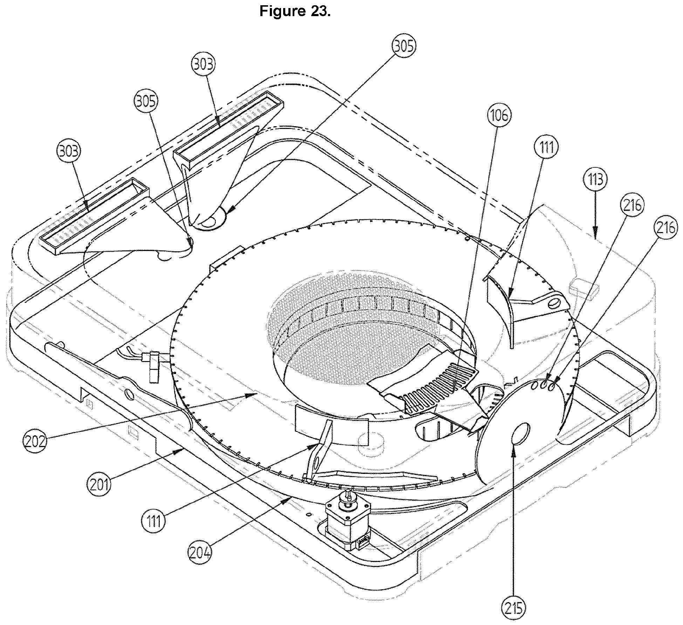

Figure 23: Isometric cut-away view of the automatic electromechanical device for collecting, processing, and storing animal feces and urine using a recoverable substrate.

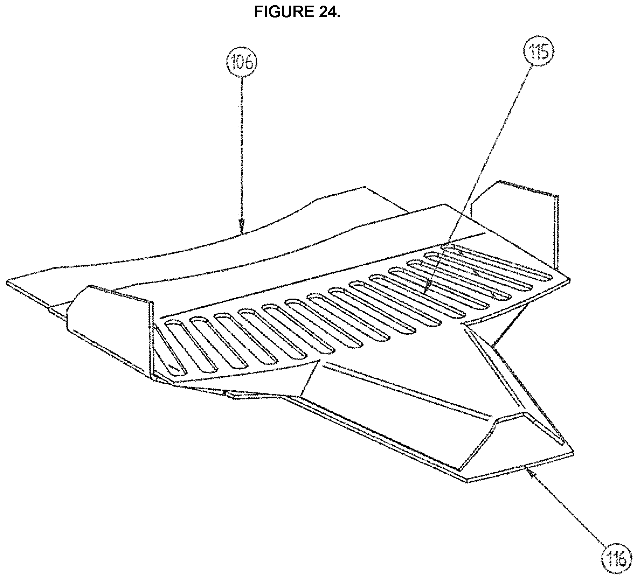

Figure 24: Isometric view of the load classifier (106), grids (115), and downcomer (116).

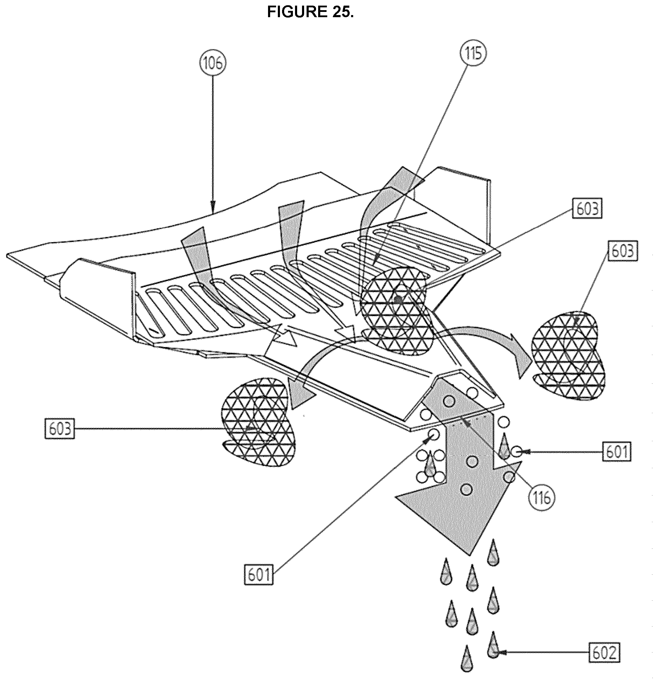

Figure 25: Flow diagram of the organic load and substrate in the load classifier (106).

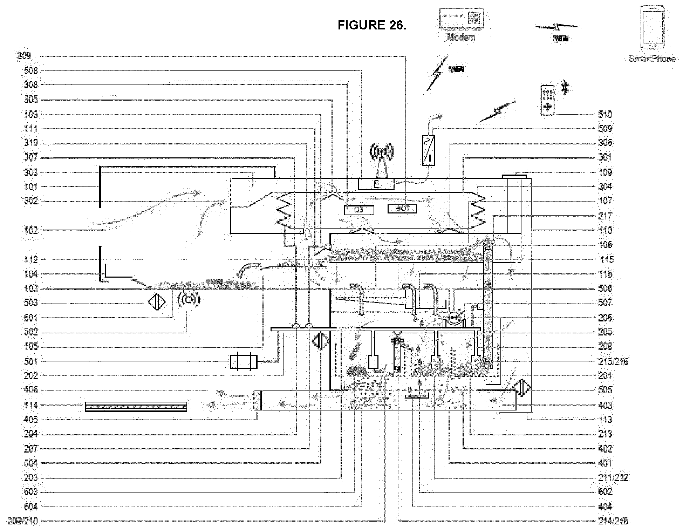

Figure 26: Process diagram of the flows of organic load, substrate, and air.

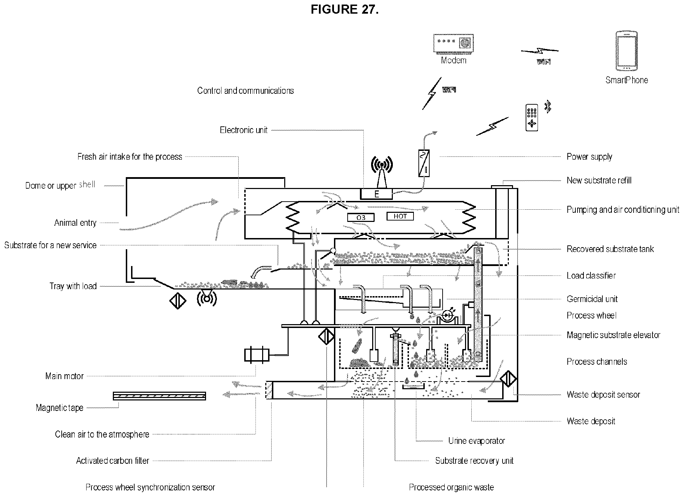

Figure 27: Process diagram of the flows of organic load, substrate, and air.

## Claims

1. Automatic electromechanical device for collecting, processing, and storing animal feces and urine using recoverable substrate, **characterized in that** it comprises a loading tray (103), a drying, grinding, and cleaning unit (201), an air conditioning unit (301), a recovered substrate reservoir (107), a waste collection unit (401), and the substrate or granules (601).

2. Automatic electromechanical device for collecting, processing, and storing animal feces and urine using recoverable substrate of claim 1, **characterized in that** the loading tray (103) is attached to an electro-vibrator (502) that, through its action, drives the substrate (601) and organic load through the loading transfer duct (105) to the load classifier (106).

3. Automatic electromechanical device for collecting, processing, and storing animal feces and urine using recoverable substrate of claim 2, **characterized in that** the load classifier (106) has grids (115) on its upper part and a descending duct (116) on one of its sides for the passage of the substrate (601) and the organic load.

4. Automatic electromechanical device for collecting, processing, and storing animal feces and urine using recoverable substrate of claim 2, **characterized in that** the loading tray (103) is positioned on the lower shell of the unit (113); this shell (113) has an attached electronic unit (508) on one of its sides, connected to a power supply (509), and houses a pet entry sensor (503) on its upper part; in addition, the shell (113) can support a dome (101) or a litter retention bib (104); said dome (101) may house the unit control panel (510), and has a slot (102) on one of its sides.

5. Automatic electromechanical device for collecting, processing, and storing animal feces and urine using recoverable substrate of claim 4, **characterized in that** the electronic unit (508) is connected to the main electric motor (501), the loading tray electro-vibrator (502), the entry sensor (503), the wheel position sensor (504), the waste cartridge position sensor (505), the UV germicidal unit (506), and the unit control panel (510).

6. Automatic electromechanical device for collecting, processing, and storing animal feces and urine using recoverable substrate of claim 4, **characterized in that** a magnetic mat (114) is located at the exit of the slot (102).

7. Automatic electromechanical device for collecting, processing, and storing animal feces and urine using recoverable substrate of claim 1, **characterized in that** the drying, grinding, and cleaning unit (201) comprises a process flywheel (202) on its upper part, and has channels (209) inside, where at least one channel is dedicated to drying feces, and another channel (211, 213) is dedicated to cleaning the substrate (601); these channels (211, 213) have mesh screens (210, 212) on their floor for the passage of organic matter; in the middle of the channels (209, 211) there is a substrate collector (214) that transfers the substrate from the Channel for feces process (209) to the cleaning channel 1 (211); additionally, this drying, grinding, and cleaning unit (201) is attached to a recovered substrate elevator (215) with magnets (216).

8. Automatic electromechanical device for collecting, processing, and storing animal feces and urine using recoverable substrate of claim 7, **characterized in that** the process flywheel (202) has cams on its front side for substrate dosing cam (207) and on its reverse side, it includes agitators for grinding and cleaning (208), cams for the air system (204), and cams for substrate recovery (205); said process flywheel (202) is coupled to a main motor (501) and is close to a position sensor (504).

9. Automatic electromechanical device for collecting, processing, and storing animal feces and urine using recoverable substrate of claim 7, **characterized in that** the recovered substrate elevator (215) is mechanically coupled to the process flywheel (202) via a mechanism (206).

10. Automatic electromechanical device for collecting, processing, and storing animal feces and urine using recoverable substrate of claim 7, **characterized in that** at least one of the channels (209, 211, 213) is equipped with a UV germicidal unit (506) and a cleaner for the UV germicidal unit (507).

11. Automatic electromechanical device for collecting, processing, and storing animal feces and urine using recoverable substrate of claim 1, **characterized in that** the air conditioning unit (301) comprises at least a bellows or air pump (304) close to an ozone generator (308) and an air heater (309); said air conditioning unit (301) generates an air curtain (310) on its sides, directing air to the loading transfer duct (105); on its upper part, it houses aspiration valves (305) that communicate with the air duct (303) and the air intake opening (302); said bellows (304) has an actuator (307) on its sides, connected at one end to the cam (204), and on its lower part, it has expiration valves (306) that lead to the air conditioner of the unit (301).

12. Automatic electromechanical device for collecting, processing, and storing animal feces and urine using recoverable substrate of claim 1, **characterized in that** the recovered substrate reservoir (107) comprises a substrate separator (217) that removes the substrate (601) from the elevator (215), has an upper opening for substrate replenishment (109), a substrate level sight glass (110), and a bottom opening for discharging the substrate to the tray (112), sealed by the substrate discharge gate (111); said gate (111) is connected to an actuator (108), mechanically dependent on the cams (207).

13. Automatic electromechanical device for collecting, processing, and storing animal feces and urine using recoverable substrate of claim 1, **characterized in that** the waste collection unit (401) comprises a collection mouth for the reservoir (402), a urine evaporator (404), and an air outlet through the mouth (406), and has a waste reservoir (403) at its bottom; said air outlet through the mouth (406) may have an activated carbon filter (405); this waste collection unit (401) may be made of biodegradable material.

14. Automatic electromechanical device for collecting, processing, and storing animal feces and urine using recoverable substrate of claim 1, **characterized in that** the waste collection unit (401) includes a waste cartridge position sensor (505); said sensor (505) is located near the drying, grinding, and cleaning unit (201).

15. Automatic electromechanical device for collecting, processing, and storing animal feces and urine using recoverable substrate of claim 1, **characterized in that** the substrate or granules (601) may be ferrous or magnetic steel granules with a diameter ranging from 1 to 10 mm; said substrate or granules (601) may be coated with a material that is hydrophobic and highly resistant to mechanical stress.

16. Automatic electromechanical device for collecting, processing, and storing animal feces and urine using recoverable substrate of claim 4, **characterized in that** the electronic unit (508) may be a PCB connected to a module for controlling a stepper motor or a DC motor, a relay or solid-state electrical output module, an optocoupled electrical input module, a programmable microcontroller or microprocessor module, a Bluetooth, Wi-Fi, infrared, or other communication modules typical of such devices, a memory expansion and data storage module, a peripheral device connection module (e.g., video camera, touchscreen, LED lights, speakers, and/or microphones), and a power supply, voltage regulation, and protection module for the board.
